# EUROPEAN PATENT SPECIFICATION

(11) **EP 2 753 220 B1**
(45) Date of publication and mention of the grant of the patent: **04.11.2020**
(21) Application number: 12766128.8
(22) Date of filing: 06.09.2012
(51) Int. Cl.: A47J 43/28, B41N 1/24

(54) **APPARATUS AND METHOD FOR PRODUCING A MULTICOLOURED DESIGN**
VORRICHTUNG UND VERFAHREN ZUR HERSTELLUNG EINES MEHRFARBIGEN ENTWURFS
APPAREIL ET PROCÉDÉ POUR PRODUIRE UN MOTIF MULTICOLORE

(30) Priority: 07.09.2011 GB 201115457
(43) Date of publication of application: 16.07.2014
(73) Proprietor: Yellow Hat Baking Stencils Ltd., Glasgow G2 4LW (GB)
(72) Inventor: Allen, Philip, Woodcote Oxfordshire, RG8 0QJ (GB)
(74) Representative: Boult Wade Tennant LLP
(86) International application number: PCT/GB2012/052195
(87) International publication number: WO 2013/034914

(56) References cited:
- US-A1- 2002 176 913
- US-A1- 2009 202 686
- US-A1- 2011 000 985

## Description

### Field of the Invention

The present invention relates to an apparatus for producing a multicoloured design, and a method for doing the same. More particularly, the invention relates to an apparatus and method for producing a multicoloured design on the surface of a food item, such as a cake, or a beverage, such as coffee.

### Background of the Invention

A stencil is a thin sheet of material with one or more holes cut into it. When the stencil is placed against or near the flat surface of an object, aerosols, powders, paints, inks, etc., may be applied over the stencil. The substance that is applied over the stencil will only come into contact with the object via the holes in the stencil. Thus, a particular design or pattern may be formed on the object, defined by the size and shape of the holes cut into the stencil.

Stencils are applicable in the fields of beverages. Cakes are also particularly suited for the formation of elaborate designs on the surface.

In the field of beverages, coffee stencils are typically placed over a cup of hot coffee, and powdered cocoa or chocolate dusting, hundreds and thousands (also known as sprinkles), or other small candies (typically in powdered form) may be scattered or otherwise dispersed over the stencil and thus produce a particular shape or pattern on the surface of the coffee. This results in a pleasing design on the coffee before it is served to a customer. Cappuccinos are particularly suited for coffee stencils, since the foamed surface of the coffee provides a degree of support to the powdered design and prevents it from dissolving in the contents of the coffee.

In the field of cakes, a design formed on the surface of a cake will last for a substantial amount of time, and is not prone to dissolution unlike on coffees. Furthermore, a cake may be more suitable for supporting a stencil placed upon it, because of the relatively rigid base afforded by a cake and on which a design may be formed.

Typically, a stencil must be manually held in place over the cake/coffee - this can lead to misalignment and often does not result in a particularly accurate design, especially if the design is relatively intricate. There is therefore a need in the art for a stencil that may be more efficiently aligned with respect to a beverage / food item and whose alignment may be more efficiently maintained without the need for constant manual intervention. The present invention seeks to address these and other deficiencies encountered in the prior art.

Other prior art techniques include the apparatus disclosed in US 6,242,026 B1 (E.J. Feeley) 5 June 2001 (05.06.01) which discloses an applicator for placement of decorations on a food item and are subsequently thermally fused to the food item. US 2011/0000985 A1 (D.J. Drake) 6 January 2011 (06.01.11) discloses a hand-held sprinkler apparatus having a blade for controllably dispensing powder through a stencil.

### Summary of the Invention

The present invention provides an apparatus for producing a multicoloured design on a surface of a beverage or food item, the apparatus comprising: a stencil mount comprising at least one first locating member; and at least two stencils; each stencil defining a horizontal plane and comprising at least one second locating member, wherein each stencil is adapted to rest upon the stencil mount in such a way that the at least one first locating member engages with the at least one second locating member, thereby inhibiting or preventing rotation of the stencil within the horizontal plane and inhibiting or preventing lateral movement of the stencil relative to the stencil mount; and wherein the stencils have complementary apertures of different shapes and dimensions which, due to the predetermined positional relationship of the stencils to the stencil mount, combine and complement one another to produce multicoloured patterns, designs or images on the beverage or food item when each stencil has a granulated substance of a different colour dispersed through its apertures, characterised in that the stencil mount and the stencil are substantially flat.

The stencil mount may be adapted to rest on the surface of the food item or on the rim of a cup.

The apparatus may further comprise fixtures for rigidly fixing the stencil mount to a food item.

The stencil mount may comprise at least one hole extending through the stencil mount, and wherein the at least one hole is for receiving a fixture to be inserted therethrough so as to fix the stencil mount to the food item.

There is provided an apparatus for producing a multicoloured design on a surface of a beverage or a food item. The apparatus comprises a stencil mount comprising a first locating member, and a stencil defining a horizontal plane and comprising a second locating member. The stencil is adapted to rest upon the stencil mount in such a way that the first locating member engages with the second locating member, thereby inhibiting or preventing rotation of the stencil within the horizontal plane and relative to the stencil mount.

The stencil mount is generally circular, although other shapes are contemplated within the scope of the invention. The horizontal plane may otherwise be referred to as a stencil plane (such as for example the plane defined by a flat stencil) or the plane in which the stencil lies. The first locating member may be positioned anywhere on either surface of the stencil mount, but is generally positioned at the periphery of the stencil mount (e.g. near the perimeter or outermost edge of the stencil mount). Similarly, the second locating member may be positioned anywhere on either surface of the stencil, but is generally located at the periphery of stencil. Advantageously, the stencil mount may be wider than the stencil so as to prevent unwanted deposit when the stencil is lifted away from the stencil mount.

The engagement of the first locating member with the second locating member may be arranged to inhibit or prevent lateral movement of the stencil relative to the stencil mount. For example, the engagement of the locating members may be such that one locating member locks into the other (e.g. in a snap-fit connection), thereby causing the stencil to be rigidly fixed to or otherwise coupled to the stencil mount. Other types of movement may be inhibited or prevented by the engagement of the first locating member with the second locating member. The engagement of the first locating member with the second locating member is generally for aligning the stencil in parallel relation to the stencil mount.

The stencil mount may comprise a central aperture. The central aperture may be large relative to the stencil mount as a whole, such that the stencil mount is substantially annular in shape. The central aperture may be sized such that the stencil overlies or overlaps the central aperture when the stencil rests upon the stencil mount. Advantageously, this ensures that all powders, dustings, granules, etc. dispersed through the apertures of the stencil may also pass through the central opening of the stencil mount.

The stencil mount may comprise a plurality of first locating members that may be arranged in contact with the stencil, such that the stencil may be positioned on top of, and spaced in parallel relation to, the stencil mount, and rest thereupon.

The stencil mount and/or the stencil may be annular in shape.

Furthermore, as mentioned above, the stencil mount and/or the stencil may be substantially flat. A flat stencil is generally easier to clean / wipe down when compared to a non-flat stencil. When reference is made to a flat stencil, it should be borne in mind that the presence of a locating member on a surface of the stencil / stencil mount will cause the stencil / stencil mount to not be perfectly flat. Nonetheless, despite such protrusions extending away from the stencil plane, the stencil / stencil mount may be considered to be substantially flat.

The stencil mount may comprise at least one additional first locating member, and the stencil may comprise a corresponding at least one additional second locating member for engaging with the at least one additional first locating member at the same time as engaging the first locating member with the second locating member. Advantageously, an additional first locating member engaged with an additional second locating member increases the strength of the engagement of the stencil with the stencil mount. In particular, two first locating members positioned on opposite sides of the stencil mount may engage with a corresponding two second locating members on opposite sides of the stencil, and thereby provide a stencil that is blocked from rotating within the horizontal plane.

The first locating member may comprise either a protrusion raised from a surface of the stencil mount or else a recess formed within the stencil mount. The second locating member may also comprise either a protrusion raised from a surface of the stencil or else a recess formed within the stencil. Thus, the protrusion/recess of the stencil mount may mate with the recess/protrusion of the stencil. The recess may itself be formed within a protrusion on the stencil / stencil mount. The protrusion may be a plug that fits into or connects with a hole or other recess. Other interconnections are envisaged.

A shape of the first locating member may be complementary to a shape of the second locating member. Thus, one locating member may engage in flush contact with another locating member. The first locating member may also be shaped in conformity with the second locating member. The first locating member and/or the second locating member may be triangular in shape. An apex of the triangular first locating member may point towards the centre of the stencil mount. This may allow a correspondingly shaped locating member on the stencil to slot into or otherwise be engaged with the first locating member. Other shapes are envisaged, such as square or elongate shapes.

The stencil mount may comprise at least one hole extending through the stencil mount, and the at least one hole may be for allowing a fixture (such as a toothpick) to be inserted therethrough so as to fix the stencil mount to a food item. The at least one hole may further extend through the first locating member. The hole may be of any diameter, but preferably has a diameter of about 3mm.
The stencil mount and the stencil may each define a respective central axis, and the stencil may comprise at least one peripheral stencil portion extending beyond the stencil mount when the stencil rests upon the stencil mount and when the central axes are aligned. The peripheral stencil portions may be bulges or protuberances that extend away from the stencil and lie within the horizontal plane. In other embodiments, the stencil may comprise a handle that may extend from the stencil in any direction, and perhaps away from the stencil plane. In either case, the bulges / handle allow a user to position / remove the stencil without accidentally disturbing the stencil mount.

The stencil may be substantially elliptical in shape (and for example may resemble a lemon in shape). The at least one peripheral stencil portion may be located along the major axis of the stencil. Thus, the stencil may be relatively circular in shape, with two bulbous extremities. The circular portion of the stencil may rest on a substantially circular stencil mount, with the circular portion of the stencil overlying the central aperture, but with the bulbous extremities extending beyond the stencil mount.

The stencil mount may comprise at least one recessed portion dimensioned such that, when the stencil rests upon the stencil mount, the stencil overlies the at least one recessed portion. The at least one peripheral stencil portion of the stencil may overlie the at least one recessed portion of the stencil mount when the stencil rests upon the stencil mount and when the first locating member is engaged with the second locating member. Advantageously, this assists a user in handling the stencil without disturbing the stencil mount when the stencil is resting on the stencil mount.

The stencil mount may comprise at least one peripheral projection lying in the horizontal plane, for facilitating grasping of the stencil mount. The stencil mount may also have one or more handles (that may take any form and that may project away from the stencil plane) for handling the stencil mount.

In a second aspect of the present invention, there is provided a method of producing a design on a surface of a beverage or a food item. The method comprises the steps of: positioning a stencil mount in relation to the surface of the beverage or food item, wherein the stencil mount comprises at least one aperture formed therein and comprises a first locating member; resting a first stencil upon the stencil mount, wherein the first stencil defines a horizontal plane and comprises one or more apertures formed therein, and wherein the first stencil rests upon the stencil mount in such a way that the first locating member engages in contact with a second locating member of the first stencil, thereby inhibiting or preventing rotation of the first stencil within the horizontal plane and inhibiting or preventing lateral movement of the stencil relative to the stencil mount; and dispersing a first granulated substance through one or more apertures of the first stencil and through the at least one aperture of the stencil mount, so as to produce an arrangement of the granulated substance on the surface of the beverage or food item.

The method further comprises the steps of: removing the first stencil from the stencil mount; resting a second stencil upon the stencil mount, wherein the second stencil defines a horizontal plane and comprises one or more apertures formed therein, and wherein the second stencil rests upon the stencil mount in such a way that the first locating member engages in contact with a third locating member of the second stencil, thereby inhibiting or preventing rotation of the second stencil within the horizontal plane and inhibiting or preventing lateral movement of the stencil relative to the stencil mount; and dispersing a second granulated substance through one or more apertures of the second stencil and through the at least one aperture of the stencil mount, so as to produce an arrangement of the second granulated substance on the surface of the beverage or food item, wherein the stencils have complementary apertures of different shapes and dimensions which, due to the predetermined positional relationship of the stencils to the stencil mount, combine and complement one another, the first and second granulated substances have different colours such that the combination of the arrangements of the first and second granulated substances produces a multicoloured design on the surface of the beverage or food item, characterised in that the stencil mount and stencil are substantially flat.

Thus, multicoloured designs may be obtained on beverages / food items by using multiple stencils and different-coloured granulated substances. The stencil mount facilitates accurate placement and orientation of the designs.

There is provided a method of producing a multicoloured design on a surface of a beverage or a food item, the method comprising the steps of: dispersing a first granulated substance through one or more apertures of a first stencil, so as to produce an arrangement of the first granulated substance on the surface of the beverage or food item; and dispersing a second granulated substance through one or more apertures of a second stencil, so as to produce an arrangement of the second granulated substance on the surface of the beverage or food item. The first and second granulated substances have different colours such that the combination of the arrangements of the first and second granulated substances produces a multicoloured design on the surface of the beverage or food item.

The method allows a user to rapidly, efficiently, and consistently produce multicoloured designs on the surface of a beverage or a food item. In particular, by using multiple stencils, complex, multicoloured patterns, designs or images can be produced on the surface of cakes or beverages, such as coffees. In particular, different shapes and dimensions of apertures may be used on both the first and second stencils such that the arrangements of granulated substances may combine and complement one another to produce complex, multicoloured patterns, designs or images.

A food item may consist of any item of food suitable for having a stencilled design formed on its surface. In particular, a food item may be a confectionary product such as a cake, but may also include pies, soups, quiches, flans, etc.

Advantageously, before the step of dispersing the first granulated substance, the method further comprises the steps of: positioning a stencil mount in relation to the surface of the beverage or food item, wherein the stencil mount comprises a first locating member; and engaging, with the first locating member, a second locating member of the first stencil, so as to align the first stencil in relation to the surface of the beverage or food item, and for producing the arrangement of the first granulated substance thereon.

By virtue of the locating member of the stencil mount, multiple stencils can be easily aligned with respect to one another, ensuring that the resultant design is precisely formed. Correct alignment and orientation of the stencils is a particular advantage of the invention, and allows complicated, multicoloured designs to be consistently and readily formed.

More advantageously, before the step of dispersing the second granulated substance, the method further comprises the steps of: disengaging the second locating member from the first locating member; and engaging, with the first locating member, a third locating member of the second stencil, so as to align the second stencil in relation to the surface of the beverage or food item, and for producing the arrangement of the second granulated substance thereon, such that the arrangement of the second granulated substance is in a predetermined positional relationship with respect to the arrangement of the first granulated substance.

Multiple stencils can be easily aligned and oriented with respect to one another, ensuring that the resultant multicoloured design is precisely formed. Thus, consistency of the designs, across multiple beverages and/or cakes, may be achieved as a result.

Even more advantageously, the predetermined positional relationship comprises a predetermined orientation of the arrangement of the second granulated substance with respect to the arrangement of the first granulated substance. Thus, the arrangements of the first and second granulated substances are correctly oriented with respect to one another, both in a lateral sense and in a rotational sense. This ensures that the required multicoloured design is accurately formed.

Advantageously, the first locating member is one of a protrusion and a hole, and the second and third locating members are the other of a protrusion and a hole. This allows a user to rapidly and easily engage one locating member with another.

There is provided an apparatus for producing a multicoloured design on a surface of a beverage or a food item. The apparatus comprises a stencil mount having one or more apertures formed therein, and a first locating member; and a first stencil having one or more apertures formed therein, and a second locating member. The one or more apertures of the stencil mount are arranged to allow dispersal of a first granulated substance of a first colour therethrough, and the one or more apertures of the first stencil are arranged to allow dispersal of a second granulated substance of a second colour therethrough.

Advantageously, the first locating member is engageable with the second locating member and is for aligning the first stencil in parallel relation to the stencil mount.

More advantageously, the one or more apertures of the stencil mount consists of a central aperture, and, when the first stencil is aligned in parallel relation to the stencil mount, the central aperture overlaps the one or more apertures of the first stencil. The central aperture exposes the maximum surface area of the first stencil to the surface of the beverage or food item, thus ensuring that the stencil mount does not interfere with the dispersal of the granulated substance through the first stencil.

Advantageously, the stencil mount is annular such that the stencil mount may rest upon the rim of a container having a beverage therein, and such that the central aperture may lie within the boundaries of the rim. By having an annular stencil mount, the invention is particularly adapted for producing multicoloured designs on the surfaces of beverages. In particular, a user need not hold the stencil mount in place but can simply allow it to rest on the container. As a result, a more precise and accurate design can be produced on the beverage surface.

More advantageously, at least two of the plurality of first locating members are located substantially at the periphery of the stencil mount. This allows the first stencil to be more easily balanced and rested upon the stencil mount.

It should be noted that any feature described above may be used with any particular aspect or embodiment of the invention.

### Brief Description of the Drawings

Various embodiments of the present invention and examples outside the scope of the present invention will now be described by way of example, with reference to the accompanying drawings.
Figure 1 A is a top-end view of a stencil mount in accordance with a first embodiment of the present invention.
Figures 1 B and 1 C are cross-sectional views of the stencil mount of Figure 1 A.
Figure 2 is a top-end view of a first stencil in accordance with the first embodiment of the present invention.
Figure 3 is a top-end view of a second stencil in accordance with the first embodiment of the present invention.
Figure 4 is a top-end view of the multicoloured design produced using the first and second stencils of the first embodiment, as seen through the stencil mount.
Figure 5 is a top-end view of a first stencil in accordance with a second embodiment of the present invention.
Figure 6 is a top-end view of a second stencil in accordance with the second embodiment of the present invention.
Figure 7 is a top-end view of the multicoloured design produced using the first and second stencils of the second embodiment, as seen through the stencil mount.
Figure 8 is a perspective view of a stencil in accordance with an example outside the scope of the present invention.
Figures 9A - 9C are perspective views of first and second stencils used in combination with a stencil mount to produce a multicoloured design, in accordance with the present invention.
Figure 10 is a top-end view of a stencil mount according to a fourth embodiment of the present invention;
Figure 11 is a top-end view of a stencil for use with the stencil mount of Figure 10; and
Figure 12 is a top-end view of the stencil of Figure 11 engaged with the stencil mount of Figure 10.

### Detailed Description of Preferred Embodiments

The present invention seeks to provide a method and apparatus for producing a multicoloured design, particularly a multicoloured design on a food item or beverage. Whilst various embodiments of the invention are described below, the invention is not limited to these embodiments and variations of these embodiments may well fall within the scope of the invention, which is to be limited only by the appended claims. Furthermore, while the first described embodiments may relate to multicoloured designs on a beverage, particularly preferred embodiments relating to a multicoloured design on a food item are also described.

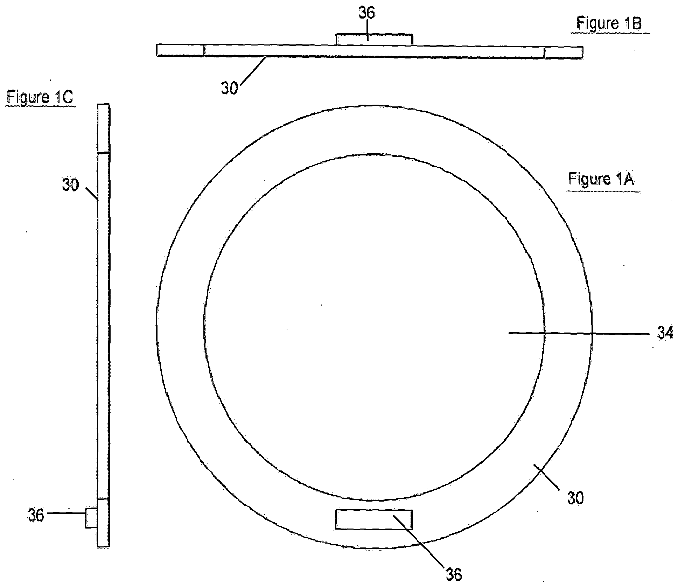

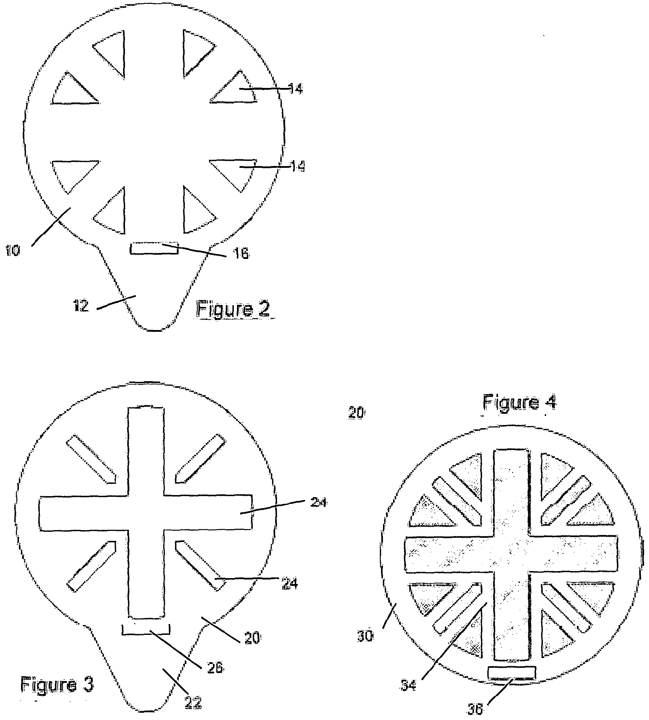

In a first embodiment of the present invention, there is provided an apparatus for producing a multicoloured design on the surface of a beverage, such as a coffee. The apparatus comprises three separate components: a first stencil 10, a second stencil 20, and a stencil mount 30. Figures 2 and 3 depict the two stencils 10 and 20, whilst Figures 1A - 1C depict various views of stencil mount 30. Stencils 10 and 20 are typically thin and circular, but may take any desired form. For instance, triangular and rectangular stencils fall within the scope of the invention, as indeed does any n-sided polygonal stencil.

Stencils 10 and 20 each have a respective handle 12 and 22 which may be easily grasped by a user. Handles 12 and 22 may take many different forms, but in the present embodiment form a triangular-shaped protrusion extending outwardly from the plane of each stencil 10 and 20. Stencils 10 and 20 are typically formed of a plastic, but alternatively could be formed from metal, wood, or any other material suitable for carrying out the present invention.

Each of stencils 10 and 20 has a number of apertures 14 and 24 formed therein. First stencil 10 has eight triangular-shaped holes 14 cut into it, whilst second stencil 24 has a cross-shaped hole and four elongate holes. Holes 14 and 24 serve to define the design that will be formed on the surface of the beverage. Any number of designs is contemplated within the scope of the disclosure, and the invention serves to provide an apparatus and method for producing such designs that are multicoloured. Different shapes and dimensions of holes may be used to form different designs.

First and second stencils 10 and 20 further comprise respective locating members, or alignment holes 16 and 26. Alignment holes 16 and 26 are preferably located near the periphery of stencils 10 and 20, and may be positioned adjacent to handles 12 and 22.

In the present embodiment, stencil mount 30 comprises a single, large central aperture 34, disposed concentric to the perimeter of stencil mount 30. Stencil mount 30 furthermore comprises its own locating member, or alignment lug 36, whose cross-sectional shape is substantially complementary to the dimensions of alignment holes 16 and 26 of first and second stencils 10 and 20. Stencil mount 30 is generally larger than stencils 10 and 20, in order to accommodate larger cappuccino-type cups. This may help ensure that central aperture 34 overlaps the arrangement of apertures 14 and 24 when stencils 10 and 20 are placed in parallel alignment with stencil mount 30.

When a user desires to produce a design on the surface of a cup of coffee, for instance, the invention may be used as follows. Note that, in the following, the surface of the coffee should be understood as comprising the topmost layer of the beverage, and may include any foam layering or other surface artefacts, etc., which may exist above the liquid surface of the coffee (e.g. as in the case of a cappuccino), and should not be considered as limited to the actual interface between the liquid coffee and the air above it.

A user first positions stencil mount 30 about the rim of the coffee cup. Because of central aperture 34 in stencil mount 30, the annular shape of stencil mount 30 advantageously allows stencil mount 30 to rest upon the rim of the coffee cup whilst exposing the beverage surface to the user. Once appropriately positioned, the user may then engage alignment lug 36 with a corresponding alignment hole 16, 26 of either the first or second stencil 10, 20. In so doing, a particular orientation of either first stencil 10 or second stencil 20 is achieved with respect to the coffee cup.

Assuming first stencil 10 is first positioned and oriented with respect to stencil mount 30, a powder or some other granulated substance may be dispersed through apertures 14 of first stencil 10, as is known in the art. The granulated substance or formula is of a certain colour, and will produce eight triangular-shaped patches of this colour on the beverage surface, corresponding to the eight triangular holes cut into first stencil 10. A granulated substance should be held to comprise any substance suitable for dispersal through the holes of the stencil, such as, but limited to, sprinkles (or hundreds and thousands), chocolate dusting, any powdered confectionary product, coffee beans, any type of confectionary sugar, such as icing sugar and caster sugar, etc.

Furthermore, because stencil mount 30 is able to rest upon the coffee cup rim without the need for the user to hold stencil mount 30 in place, a precise and accurate design or pattern may be achieved, as stencil mount 30 is free from any accidental disturbances, shakes or hand movements from the user that may otherwise affect the correct alignment of stencil 10 with respect to the coffee cup.

Once the first powder has been dispersed through holes 14 of first stencil 10, thus producing an arrangement of the powder on the beverage surface, first stencil 10 may then be removed from stencil mount 30 by disengaging alignment hole 16 from alignment lug 36. Second stencil 20 may then be aligned with stencil mount 30, again, by engaging alignment lug 36 with alignment hole 26, and positioning second stencil 20 in concentric alignment with stencil mount 30. By virtue of central aperture 34, the beverage surface is exposed to holes 24 of second stencil 20. A second powder, of a different colour to the first powder, may then be dispersed through the cross-like aperture and elongated holes of second stencil 20.

Note that the position of alignment holes 16 and 26 on each of stencils 10 and 20 determines how the different sets of holes 14 and 24 on each of first and second stencils 10 and 20 will be oriented with respect to stencil mount 30, and therefore ultimately determines how the different coloured arrangements of powder will be oriented on the surface of the beverage. Thus, in the present embodiment, and by using the combination of the arrangements of the two different-coloured powders, a multicoloured design may be produced on the beverage surface, as seen in Figure 4. In particular, by dispersing a blue-coloured powder through holes 14 of first stencil 10, and a red-coloured powder through holes 24 of second stencil 20, a design of the Union Jack may be produced on the beverage surface, again, as seen in Figure 4.

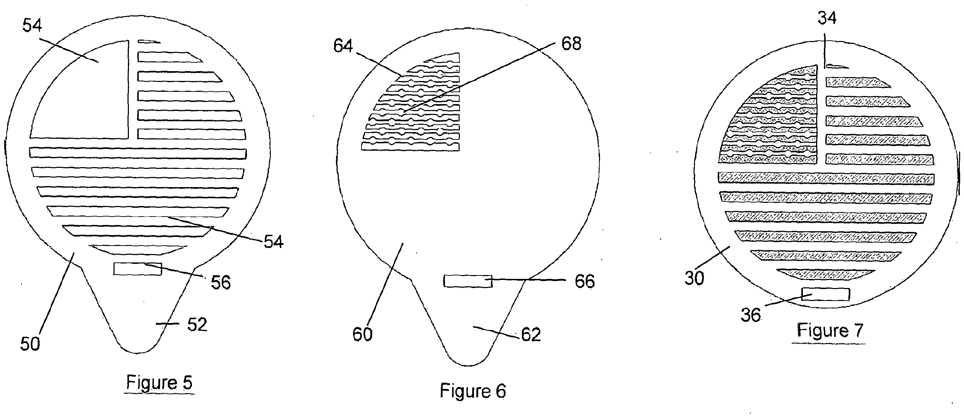

By using complementary apertures on both the first and second stencils, various designs or patterns may be produced on the beverage. Another example of a design is shown in Figures 5 - 7. In this embodiment, a first stencil 50 comprises apertures 54 in the form of multiple, parallel, elongate holes. A second stencil 60 comprises apertures 64 in the form of multiple, parallel, elongate holes shaped as a quarter segment of a circle. Apertures 64 furthermore comprise multiple, rounded indentations 68 along the parallel edges of apertures 64, as clearly seen in Figure 6. Using the above-described method, by properly orienting and aligning stencils 50 and 60 with respect to stencil mount 30, using alignment lug 36 and alignment holes 56 and 66, a design of the American flag may be produced, as seen in Figure 7.

Note that the invention need not be limited to a minimum of three stencils. In particular, stencil mount 30 itself may replace one of the other two stencils 10, 20 and may serve for the dispersal of a coloured powder through central aperture 34. For example, by dispersing a first coloured powder through central aperture 34, a relatively large background of a certain colour of powder may be produced on the coffee surface. One of the other stencils 10, 20 may then be aligned with respect to the coffee cup, using stencil mount 30 as described above. A second coloured powder may then be dispersed through holes 14, 24 of the other stencil 10, 20 that is used, the second powder having a different colour to the first powder. Thus, a multicoloured, powdered design may be formed on the coffee surface, albeit with less complexity than the Union Jack depicted in Figure 4.

In alternative embodiments, stencil mount 30 may comprise multiple holes cut into it, rather than a single, large central aperture. Whilst this limits the surface area of the coffee surface that is exposed to the holes 14, 24 of the first/second stencil 10, 20, it may increase the complexity of the arrangement of the first powder on the coffee. Alternatively, in another embodiment, rather than having alignment hole 16, stencil 10 may have an alignment lug in its place (similar to alignment lug 36), thus effectively replacing stencil mount 30.

The present invention allows users to more efficiently and more rapidly produce a multicoloured design on the surface of coffee. Furthermore, alignment lug 36 allows the particular orientation of first and second stencils 10 and 20 with respect to the coffee cup to be maintained in a fixed, stable position, thus ensuring that the desired design may be accurately and repeatedly reproduced on different beverages.

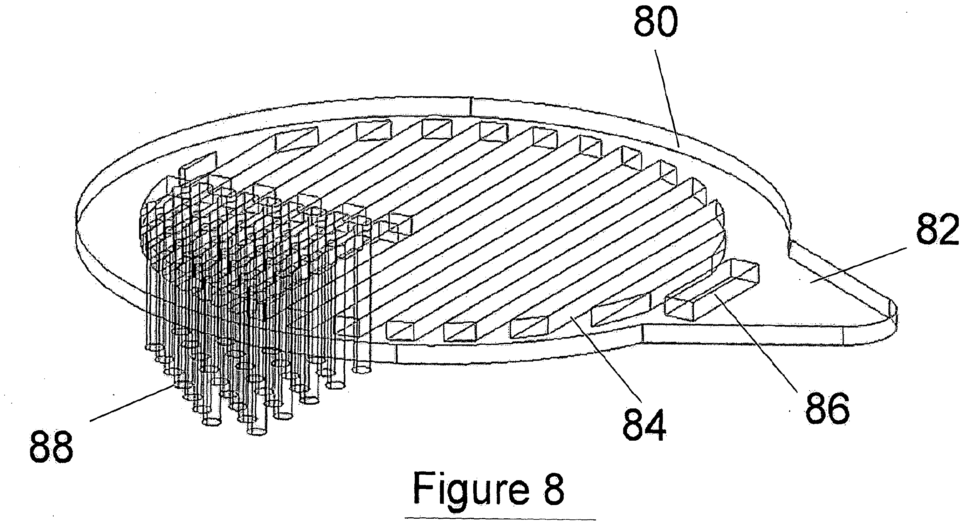

In an example outside the scope of the present invention, seen in Figure 8, there is provided stencil mount 30 and a stencil 80. Stencil 80 comprises a different arrangement of apertures 84 to those described above, and effectively comprises a combination of apertures 54 and 64 of respective stencils 50 and 60. Stencil 80 furthermore comprises multiple elongate projections or protrusions, referred to herein as rods 88. Rods 88 are substantially orthogonal to stencil 80, and project away from stencil 80.

This example is particularly useful for generating a multicoloured pattern on the surface of a cappuccino, or other foamed coffee. Stencil mount 30 is first placed over the rim of the coffee cup, as described above. Alignment lug 36 may then slot into an alignment hole 86 of stencil 80, with rods 88 projecting downwards, and dipping into, the foamed coffee. A powdered substance, such as chocolate, or red-coloured dusting, may then be sprinkled or dispersed over stencil 80, thus forming a design of red, parallel stripes over the surface of the coffee foam. Stencil 80 may then be disengaged from stencil mount 30. In so doing, rods 88 are withdrawn from the contents of the coffee, and act to pull the foam upwards. This creates a pattern of small bumps or nodules of foam on the surface of the coffee, in the region where rods 88 dipped into the coffee. Rods of a greater length will generally produce a pattern of 'foam bumps' of a higher quality, due to the fact that the foam is extruded and drawn out over a longer period of time as the rods are withdrawn from the coffee.

Another advantage of rods 88 is that, by extending beneath the surface of the foamed beverage, they serve to prevent the powdered substance from dissipating across the beverage surface and dissolving within the contents of the coffee. Rods 88 thus effectively act as barriers to the dispersion or diffusion of the powdered substance within the coffee.

In the example, the resultant design is the stars and stripes of the American flag. Whilst only a single colour of powdered substance is used, a person skilled in the art will appreciate that multiple stencils may also be used in conjunction with stencil 80 and stencil mount 30, in order to produce more complex and colourful designs.

Whilst in the example rods 88 protrude away from the stencil 80, it should also be appreciated that different forms of protrusions may be used in order to coax a cappuccino's foam into different shapes and forms as the projections are withdrawn from the beverage.

The present invention also seeks to provide a general method for producing a multicoloured design on the surface of a beverage. In this aspect of the invention, there is no need for there to be an alignment lug disposed on any of the stencils.

In order to produce a multicoloured design, a user first takes a first stencil (such as stencil 10 or 50 in Figures 2 and 5, respectively), and disperses a first powder through the apertures of the first stencil so as to produce a first arrangement of the powder on the beverage surface. The user then takes a second stencil and disperses a second powder, having a different colour to the first powder, through the apertures of the second stencil, thus producing an arrangement of the second powder on the coffee surface. As a result of the combination of the two arrangements formed on the coffee surface, a multicoloured pattern or design is generated on the coffee surface. In prior art methods, one would typically have to draw or else craft designs into the coffee surface (e.g. the foam of a cappuccino) using complicated tools or methods. Alternatively, designs of a single colour were produced using only a single stencil. In contrast, the present invention provides a much simpler method for easily allowing a user to create reproducible, multicoloured designs on a beverage surface.

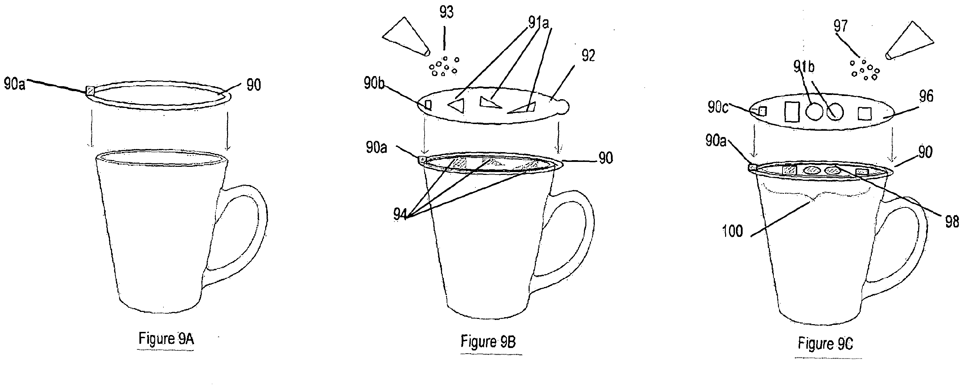

Figures 9A - 9C clearly illustrate three separate stages in the generation of a multicoloured design, in accordance with an embodiment of the present invention. In Figure 9A, a stencil mount 90 having an alignment lug 90a is positioned over the rim of a mug of coffee. In Figure 9B, a first stencil 92 with alignment hole 90b and apertures 91a is positioned in alignment with stencil mount 90. Alignment hole 90b is engaged with alignment lug 90a in order to ensure proper alignment of first stencil 92 with stencil mount 90. A first powder 93 is dispersed over apertures 91a of first stencil 92. This produces a first arrangement 94 of first powder 93 on the surface of the coffee. Then, first stencil 92 is disengaged from stencil mount 90, and a second stencil 96 having an alignment hole 90c and apertures 91b is engaged with stencil mount 90. Finally, a second powder 97, of a different colour to first powder 93, is dispersed through apertures 91b, thus producing a second arrangement 98 on the coffee surface. The combination of first and second arrangements 94 and 98 produces a multicoloured design 100 on the surface of the coffee.

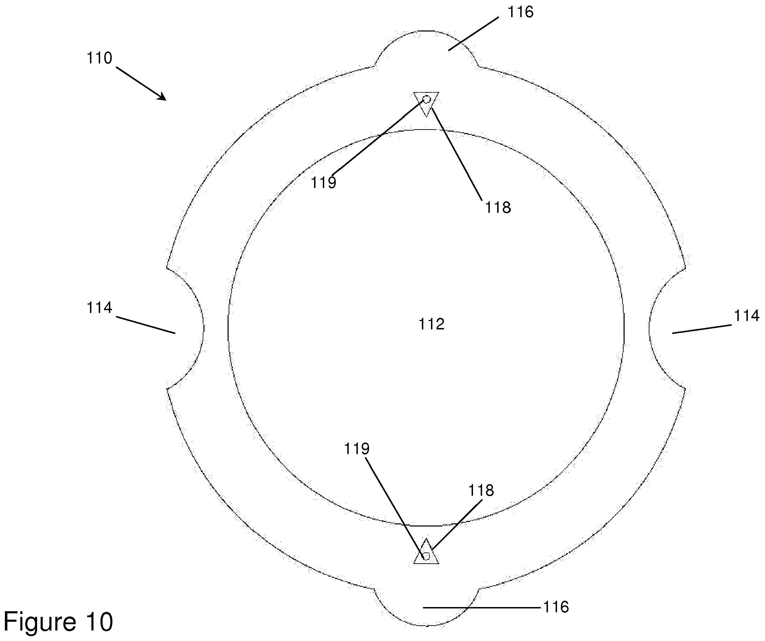

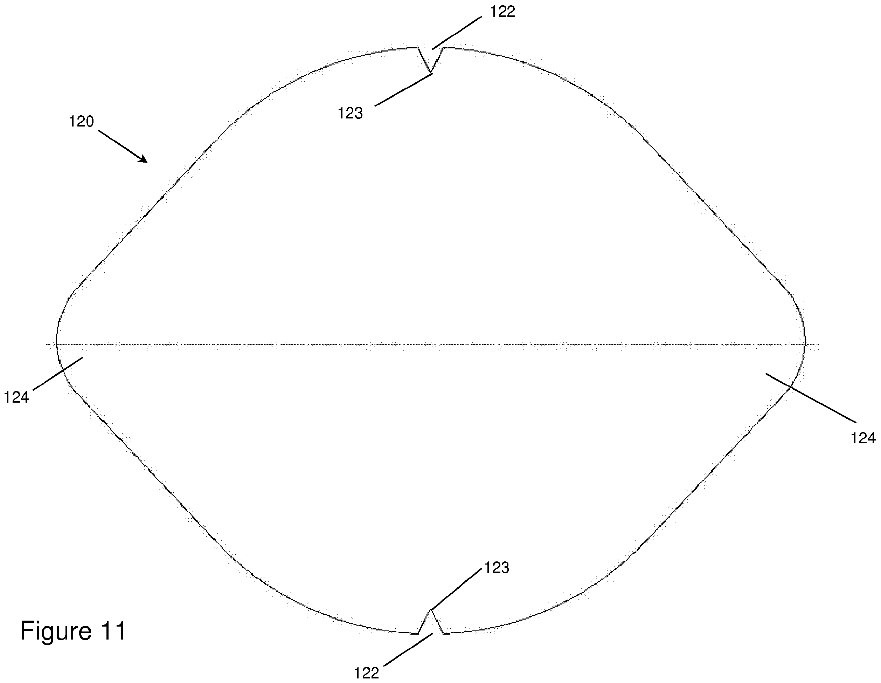

According to a fourth embodiment of the invention, there is provided a stencil mount (seen in Figure 10) and a stencil (seen in Figure 11).

Stencil mount 110 (otherwise known as a locating ring) is annular in shape and comprises central opening 112, recesses 114, protrusions 116 and locating members 118. Locating members 118 are positioned diametrically opposite one another. They are each formed of a triangular portion raised above the surface of stencil mount 110. Each locating member 118 is approximately as thick as the thickness of stencil mount 110, but in other embodiments may vary in thickness. In the present embodiment, each locating member 118 has an apex of its triangle pointing towards the other locating member 118. Holes 119 are formed in each locating member 118, and extend from the topmost surface of locating member 118 to the bottommost surface of stencil mount 110.

Protrusions 116 are positioned diametrically opposite one another, each being adjacent to a respective locating member 118. Protrusions 116 are semicircular in shape, but in other embodiments may take other shapes. A user wishing to handle stencil mount 110 may do so with greater ease by grasping protrusions 116. Ideally, stencil mount 110 is sized such that its diameter is approximately equal to that of a cake on which it may rest. Thus, protrusions 116 may extend beyond the cake, thereby facilitating handling of stencil mount 110. In some embodiments, however, stencil mount 110 may be relatively small compared to a cake and therefore multiple designs may be produced on the surface of the cake, by repositioning stencil mount 110 on a different part of the cake after the creation of each design.

Recesses 114 are also located on the periphery of stencil mount 110, each being diametrically opposite the other. Recesses 114 are positioned such that a diameter extending from one recess 114 to the other intersects at approximately a right angle a diameter extending between locating members 118. Recesses 114 have a semi-circular or otherwise arcuate shape, and extend radially approximately halfway between the outer periphery of stencil mount 110 and the perimeter of central opening 112.

Turning to Figure 11, there is shown a stencil according to the fourth embodiment of the invention. Stencil 120 comprises a pair of second locating members 122 and a pair of peripheral stencil portions, or bulges 124. Not shown are a plurality of apertures formed within stencil 120. These apertures allow the dispersal of a granulated substance therethrough, for forming a pattern on a beverage or a food item. A person skilled in the art will appreciate that the number and shape of the apertures may vary wildly depending on the desired pattern, without departing from the scope of the invention.

Stencil 120 is largely elliptical in shape, with its major axis intersecting bulges 124 along their midsection. Locating members 122 are triangular in shape, and consist of recesses, notches or indents cut into stencil 120. An apex 123 of each triangular locating member 122 points towards an apex 123 of the other locating member 122, with the minor axis of stencil 120 intersecting both locating members 122 along these apexes.

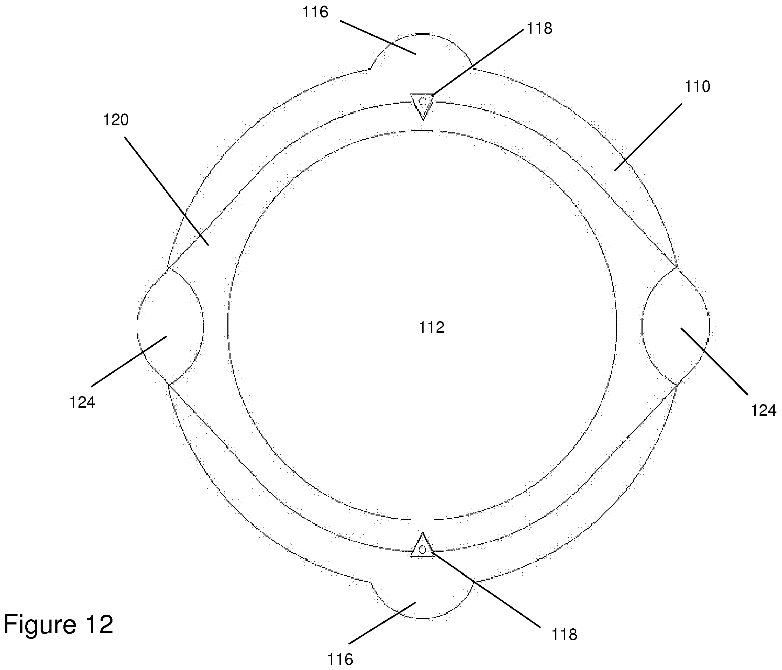

Figure 12 illustrates stencil 120 engaged with stencil mount 110. More specifically, Figure 12 illustrates locating members 118 of stencil mount 110 engaged with locating members 122 of stencil 120. Locating members 118 and 122 have largely complementary shapes, and therefore, when stencil 120 is engaged with stencil mount 110, the inner surfaces of locating members 122 are substantially flush and in contact with the outer surfaces of locating members 118.

This engagement at least inhibits and, in the present embodiment, effectively prevents rotation of stencil 120 relative to stencil mount 110. Thus, with the effective locking of stencil 120 to stencil mount 110 in the horizontal plane, proper alignment of stencil 120 relative to stencil mount 110 may be achieved, as well as the prevention of lateral movement of stencil 120 relative to stencil mount 110. Misalignment of stencil 120 relative to stencil mount 110 may also be prevented.

When stencil 120 rests on stencil mount 110, bulges 124 overlie recesses 114, and thus a user may more easily grasp stencil 120 by pinching bulges 124. Furthermore, protrusions 116 facilitate handling of stencil mount 110. In order to rigidly fix stencil mount 110 to a food item, fixtures such as toothpicks or the like may be inserted through holes 119.

According to a method of producing a pattern on a surface of a beverage or a food item, a user may first position stencil mount 110 on a beverage or a cake, for example. If positioned on a food item, stencil mount 110 may be fixed in place by inserting toothpicks (or a similar item) through holes 119. The orientation of stencil mount 110 relative to the beverage / food item assists in defining the final orientation of the multicoloured pattern. Then, stencil 120 is engaged with stencil mount 110 by engaging locating members 122 with corresponding locating members 118. Once fixed in place, a granulated substance may be dispersed through the apertures of stencil 120, and through central opening of stencil mount 110.

It will be apparent to those skilled in the art that the invention may be adapted and modified beyond the scope of this description. For example, designs with three, four, or more colours may be produced, each by using the appropriate number of stencils. It should be noted that the above-described invention can also be used in conjunction with cakes and cake icing. For example, multicoloured designs may be easily and rapidly produced on cake surfaces by positioning stencil mount 30 and first/second/third/etc. stencils in appropriate positions over the topmost surface of a cake. Whilst stencil mount 30 may be positioned over the cake without the need for it to be held in place, it is preferable, so as not to disturb the icing on the cake, for a user to hold stencil mount 30 in position over the cake.

Rods 88 of stencil 80 could also be used to draw out or extrude the icing of a cake into protuberances or bumps. Rods 88 may penetrate and dip into the icing when stencil 80 is placed in position, and subsequently be withdrawn so as to stretch and extend the icing into the desired shape.

Furthermore, the invention is not limited to beverages and cakes, but, as explained above, may equally be applied to other food items, such as tarts, flans, pies, quiches, etc.

## Claims

1. An apparatus for producing a multicoloured design on a surface of a beverage or a food item, the apparatus comprising:
a stencil mount (30; 110) comprising at least one first locating member (36; 118); and
at least two stencils (10, 20; 50, 60; 120);
each stencil defining a horizontal plane and comprising at least one second locating member (16; 26; 122), wherein each stencil is adapted to rest upon the stencil mount in such a way that the at least one first locating member (36; 118) engages with the at least one second locating member (16; 26; 122), thereby inhibiting or preventing rotation of the stencil within the horizontal plane and inhibiting or preventing lateral movement of the stencil relative to the stencil mount; and
wherein the stencils (10, 20; 50, 60; 120) have complementary apertures of (14, 24; 54, 68) different shapes and dimensions which, due to the predetermined positional relationship of the stencils to the stencil mount, combine and complement one another to produce multicoloured patterns, designs or images on the beverage or food item when each stencil has a granulated substance of a different colour dispersed through its apertures, **characterised in that** the stencil mount and the stencil are substantially flat.

2. The apparatus of claim 1, wherein the stencil mount (30; 110) is adapted to rest on the surface of the food item or on the rim of a cup.

3. The apparatus of any preceding claim, further comprising fixtures for rigidly fixing the stencil mount (110) to a food item.

4. The apparatus of claim 1 or claim 2, wherein the stencil mount (110) comprises at least one hole (119) extending through the stencil mount, and wherein the at least one hole is for receiving a fixture to be inserted therethrough so as to fix the stencil mount to the food item.

5. The apparatus of claim 1, wherein the engagement of the first locating member (36; 118) with the second locating member (16; 26; 122) is arranged to inhibit or prevent lateral movement of the stencil (10, 20; 50, 60; 120) relative to the stencil mount (30; 110).

6. The apparatus of any preceding claim, wherein the stencil mount (30; 110) comprises a central aperture (34; 112).

7. The apparatus of claim 6, wherein the central aperture (34; 112) is sized such that the stencil (10, 20; 50, 60; 120) overlies the central aperture when the stencil rests upon the stencil mount (30; 110).

8. The apparatus of any preceding claim, wherein the stencil mount (30; 110) and/or the stencil (10, 20; 50, 60; 120) is annular in shape.

9. The apparatus of any preceding claim, wherein the stencil mount (110) comprises at least one additional first locating member, and wherein the stencil comprises a corresponding at least one additional second locating member for engaging with the at least one additional first locating member at the same time as engaging the first locating member with the second locating member.

10. The apparatus of any preceding claim, wherein the first/second locating member comprises either a protrusion raised from a surface of the stencil mount/stencil or else a recess formed within the stencil mount/stencil.

11. The apparatus of any preceding claim, wherein a shape of the first locating member (36; 118) is complementary to a shape of the second locating member (16; 26; 122).

12. The apparatus of any preceding claim, wherein the stencil mount (110) and the stencil (120) each define a respective central axis, and wherein the stencil comprises at least one peripheral stencil portion (124) extending beyond the stencil mount when the stencil rests upon the stencil mount and when the central axes are aligned.

13. The apparatus of any preceding claim, wherein the stencil mount (110) comprises at least one recessed portion (114) dimensioned such that, when the stencil (120) rests upon the stencil mount (110), the stencil overlies the at least one recessed portion.

14. The apparatus of claim 13 when dependent on claim 12, wherein the at least one peripheral stencil portion (124) of the stencil (120) overlies the at least one recessed portion (114) of the stencil mount (110) when the stencil rests upon the stencil mount and when the first locating member (118) is engaged with the second locating member (122).

15. The apparatus of any preceding claim, wherein the stencil mount (30; 110) comprises at least one peripheral projection (116) lying in the horizontal plane, for facilitating grasping of the stencil mount.

16. The apparatus of any preceding claim, wherein the stencil (10, 20; 50, 60; 120) comprises one or more apertures formed therein, and wherein the central aperture overlaps the one or more apertures of the stencil when the stencil rests upon the stencil mount (30; 110).

17. A method of producing a design on a surface of a beverage or a food item, the method comprising the steps of:
positioning a stencil mount (30; 110) in relation to the surface of the beverage or food item, wherein the stencil mount comprises at least one aperture formed therein and comprises a first locating member (36; 118);
resting a first stencil (10; 50) upon the stencil mount (30; 110), wherein the first stencil defines a horizontal plane and comprises one or more apertures (14; 54) formed therein, and wherein the first stencil rests upon the stencil mount in such a way that the first locating member (36; 56; 118) of the stencil mount engages in contact with a second locating member (16; 118) of the first stencil, thereby inhibiting or preventing rotation of the first stencil within the horizontal plane and inhibiting or preventing lateral movement of the stencil relative to the stencil mount; and
dispersing a first granulated substance through one or more apertures (14; 54) of the first stencil (10; 50) and through the at least one aperture of the stencil mount (30; 110), so as to produce an arrangement of the granulated substance on the surface of the beverage or food item, and
removing the first stencil (10; 50) from the stencil mount (30; 110);
resting a second stencil (20; 60) upon the stencil mount (30; 110), wherein the second stencil defines a horizontal plane and comprises one or more apertures (24; 64; 68) formed therein, and wherein the second stencil rests upon the stencil mount in such a way, that the first locating member (36; 118) of the stencil mount engages in contact with a third locating member (26; 66; 118) of the second stencil, thereby inhibiting or preventing rotation of the second stencil within the horizontal plane and inhibiting or preventing lateral movement of the stencil relative to the stencil mount; and
dispersing a second granulated substance through one or more apertures (24; 64; 68) of the second stencil (20; 60) and through the at least one aperture of the stencil mount (30; 110), so as to produce an arrangement of the second granulated substance on the surface of the beverage or food item, wherein the stencils have complementary apertures of different shapes and dimensions and dimensions which, due to the predetermined positional relationship of the stencils to the stencil mount, combine and complement one another, the first and second granulated substances have different colours such that the combination of the arrangements of the first and second granulated substances produces a multicoloured design on the surface of the beverage or food item,
**characterised in that** the stencil mount and stencil are substantially flat.

18. The method of claim 17, wherein the stencil mount (30; 110) comprises at least one peripheral projection (116) lying in the horizontal plane, and the method further comprising grasping the stencil mount by the at least one peripheral projection.

## Patentansprüche

1. Vorrichtung zur Herstellung eines mehrfarbigen Designs an einer Fläche eines Getränks oder eines Lebensmittelgegenstandes, wobei die Vorrichtung umfasst:
eine Schablonenhalterung (30; 110), umfassend wenigstens ein erstes Lokalisierungselement (36; 118); und
wenigstens zwei Schablonen (10, 20; 50, 60; 120);
wobei jede Schablone eine horizontale Ebene definiert und wenigstens ein zweites Lokalisierungselement (16; 26; 122) umfasst, wobei jede Schablone dazu eingerichtet ist, in einer derartigen Weise auf der Schablonenhalterung aufzuliegen, dass das erste Lokalisierungselement (36; 118) mit dem wenigstens einen zweiten Lokalisierungselement (16; 26; 122) eingreift, wodurch eine Rotation der Schablone innerhalb der horizontalen Ebene gehemmt oder unterbunden wird und eine laterale Bewegung der Schablone relativ zu der Schablonenhalterung gehemmt oder unterbunden wird;
wobei die Schablonen (10, 20; 50, 60; 120) komplementäre Öffnungen (14, 24; 54, 68) verschiedener Formen und Abmessungen aufweisen, welche, aufgrund der vorbestimmten Positionsbeziehung der Schablonen in Bezug auf die Schablonenhalterung, einander kombinieren und ergänzen, um mehrfarbige Muster, Designs oder Bilder an dem Getränk oder dem Nahrungsmittelgegenstand herzustellen, wenn durch die Öffnungen jeder Schablone eine granulierte Substanz einer verschiedenen Farbe dispergiert wird, **dadurch gekennzeichnet, dass** die Schablonenhalterung und die Schablone im Wesentlichen eben sind.

2. Vorrichtung nach Anspruch 1, wobei die Schablonenhalterung (30; 110) dazu eingerichtet ist, an der Fläche des Lebensmittelgegenstandes oder an dem Rand einer Tasse aufzuliegen.

3. Vorrichtung nach einem vorhergehenden Anspruch, ferner umfassend Fixiereinrichtungen zum starren Fixieren der Schablonenhalterung (110) an einem Lebensmittelgegenstand.

4. Vorrichtung nach Anspruch 1 oder Anspruch 2, wobei die Schablonenhalterung (110) wenigstens ein Loch (119) umfasst, welches sich durch die Schablonenhalterung erstreckt, und wobei das wenigstens eine Loch zum Aufnehmen einer Fixiereinrichtung ist, welche dadurch einzusetzen ist, um die Schablonenhalterung an dem Lebensmittelgegenstand zu befestigen.

5. Vorrichtung nach Anspruch 1, wobei der Eingriff des ersten Lokalisierungselements (36; 118) mit dem zweiten Lokalisierungselement (16; 26; 122) dazu eingerichtet ist, eine laterale Bewegung der Schablone (10, 20; 50, 60; 120) relativ zu der Schablonenhalterung (30; 110) zu hemmen oder zu unterbinden.

6. Vorrichtung nach einem vorhergehenden Anspruch, wobei die Schablonenhalterung (30; 110) eine mittige Öffnung (34; 112) umfasst.

7. Vorrichtung nach Anspruch 6, wobei die mittige Öffnung (34; 112) derart bemessen ist, dass die Schablone (10; 20; 50, 60; 120) die mittige Öffnung überlagert, wenn die Schablone auf der Schablonenhalterung (30; 110) aufliegt.

8. Vorrichtung nach einem vorhergehenden Anspruch, wobei die Schablonenhalterung (30; 110) und/oder die Schablone (10, 20; 50, 60; 120) ringförmig ist.

9. Vorrichtung nach einem vorhergehenden Anspruch, wobei die Schablonenhalterung (110) wenigstens ein zusätzliches erstes Lokalisierungselement umfasst und wobei die Schablone wenigstens ein entsprechendes zusätzliches zweites Lokalisierungselement umfasst, welches zur gleichen Zeit mit dem wenigstens einen zusätzlichen ersten Lokalisierungselement eingreift wie das erste Lokalisierungselement mit dem zweiten Lokalisierungselement eingreift.

10. Vorrichtung nach einem vorhergehenden Anspruch, wobei das erste/zweite Lokalisierungselement entweder einen Vorsprung, welcher von einer Fläche der Schablonenhalterung/Schablone erhöht ist, oder ansonsten eine Aussparung umfasst, welche innerhalb der Schablonenhalterung/Schablone gebildet ist.

11. Vorrichtung nach einem vorhergehenden Anspruch, wobei eine Form des ersten Lokalisierungselements (36; 118) zu einer Form des zweiten Lokalisierungselements (16; 26; 122) komplementär ist.

12. Vorrichtung nach einem vorhergehenden Anspruch, wobei die Schablonenhalterung (110) und die Schablone (120) jeweils eine entsprechende Mittelachse definieren und wobei die Schablone wenigstens einen Schablone-Umfangsabschnitt (124) umfasst, welcher sich über die Schablonenhalterung erstreckt, wenn die Schablone auf der Schablonenhalterung aufliegt und wenn die Mittelachsen ausgerichtet sind.

13. Vorrichtung nach einem vorhergehenden Anspruch, wobei die Schablonenhalterung (110) wenigstens einen ausgesparten Abschnitt (114) umfasst, welcher derart dimensioniert ist, dass, wenn die Schablone (120) auf der Schablonenhalterung (110) aufliegt, die Schablone den wenigstens einen ausgesparten Abschnitt überlagert.

14. Vorrichtung nach Anspruch 13, wenn abhängig von Anspruch 12, wobei der wenigstens eine Schablone-Umfangsabschnitt (124) der Schablone (120) den wenigstens einen ausgesparten Abschnitt (114) der Schablonenhalterung (110) überlagert, wenn die Schablone auf der Schablonenhalterung aufliegt und wenn das erste Lokalisierungselement (118) mit dem zweiten Lokalisierungselement (122) in Eingriff gebracht ist.

15. Vorrichtung nach einem vorhergehenden Anspruch, wobei die Schablonenhalterung (30; 110) wenigstens einen Umfangsvorsprung (116) zum Erleichtern eines Ergreifens der Schablonenhalterung umfasst, welcher in der horizontalen Ebene liegt.

16. Vorrichtung nach einem vorhergehenden Anspruch, wobei die Schablone (10, 20; 50, 60; 120) eine oder mehrere Öffnungen darin gebildet umfasst und wobei die mittige Öffnung die eine oder die mehreren Öffnungen der Schablone überlappt, wenn die Schablone auf der Schablonenhalterung (30; 110) aufliegt.

17. Verfahren zum Herstellen eines Designs an einer Fläche eines Getränks oder eines Lebensmittelgegenstandes, wobei das Verfahren die folgenden Schritte umfasst:
Positionieren einer Schablonenhalterung (30; 110) in Bezug auf die Fläche des Getränks oder des Lebensmittelgegenstandes, wobei die Schablonenhalterung wenigstens eine darin gebildete Öffnung umfasst und ein erstes Lokalisierungselement (36; 118) umfasst;
Aufliegen einer ersten Schablone (10; 50) auf der Schablonenhalterung (30; 110), wobei die erste Schablone eine horizontale Ebene definiert und eine oder mehrere Öffnungen (14; 54) darin gebildet umfasst und wobei die erste Schablone in einer derartigen Weise auf der Schablonenhalterung aufliegt, dass das erste Lokalisierungselement (36; 56; 118) der Schablonenhalterung in Kontakt mit einem zweiten Lokalisierungselement (16; 118) der ersten Schablone eingreift, wodurch eine Rotation der ersten Schablone innerhalb der horizontalen Ebene gehemmt oder verhindert wird und eine laterale Bewegung der Schablone relativ zu der Schablonenhalterung gehemmt oder gehindert wird; und
Dispergieren einer ersten granulierten Substanz durch eine oder mehrere Öffnungen (14; 54) der ersten Schablone (10; 50) und durch die wenigstens eine Öffnung der Schablonenhalterung (30; 110), um an der Fläche des Getränks oder des Lebensmittelgegenstandes eine Anordnung der granulierten Substanz herzustellen, und
Entfernen der ersten Schablone (10; 50) von der Schablonenhalterung (30; 110);
Aufliegen einer zweiten Schablone (20; 60) auf der Schablonenhalterung (30; 110), wobei die zweite Schablone eine horizontale Ebene definiert und eine oder mehrere Öffnungen (24; 64; 68) darin gebildet umfasst und wobei die zweite Schablone in einer derartigen Weise auf der Schablonenhalterung aufliegt, dass das erste Lokalisierungselement (36; 118) der Schablonenhalterung in Kontakt mit einem dritten Lokalisierungselement (26; 66; 118) der zweiten Schablone eingreift, wodurch eine Rotation der zweiten Schablone innerhalb der horizontalen Ebene gehemmt oder verhindert wird und eine laterale Bewegung der Schablone relativ zu der Schablonenhalterung gehemmt oder gehindert wird; und Dispergieren einer zweiten granulierten Substanz durch eine oder mehrere Öffnungen (24; 64; 68) der zweiten Schablone (20; 60) und durch die wenigstens eine Öffnung der Schablonenhalterung (30; 110), um an der Fläche des Getränks oder des Lebensmittelgegenstandes eine Anordnung der zweiten granulierten Substanz herzustellen, wobei die Schablonen komplementäre Öffnungen verschiedener Formen und Abmessungen und Abmessungen aufweisen, welche, aufgrund der vorbestimmten Positionsbeziehung der Schablonen in Bezug auf die Schablonenhalterung, einander kombinieren und ergänzen, wobei die erste und die zweite granulierte Substanz verschiedene Farben aufweisen, so dass die Kombination der Anordnungen der ersten und der zweiten granulierten Substanz an der Fläche des Getränks oder des Lebensmittelgegenstands ein mehrfarbiges Design herstellt,
**dadurch gekennzeichnet, dass** die Schablonenhalterung und die Schablone im Wesentlichen eben sind.

18. Verfahren nach Anspruch 17, wobei die Schablonenhalterung (30; 110) wenigstens einen Umfangsvorsprung (116) umfasst, welcher in der horizontalen Ebene liegt, und das Verfahren ferner ein Ergreifen der Schablonenhalterung durch den wenigstens einen Umfangsvorsprung umfasst.

## Revendications

1. Appareil pour produire un dessin multicolore sur une surface d'une boisson ou d'un produit alimentaire, l'appareil comprenant :
un support de pochoir (30 ; 110) comprenant au moins un premier organe de positionnement (36 ; 118) ; et
au moins deux pochoirs (10, 20 ; 50, 60 ; 120) ;
chaque pochoir définissant un plan horizontal et comprenant au moins un deuxième organe de positionnement (16 ; 26 ; 122), où chaque pochoir est adapté pour reposer sur le support de pochoir de sorte que l'au moins un premier organe de positionnement (36 ; 118) vienne en prise avec l'au moins un deuxième organe de positionnement (16 ; 26 ; 122), bloquant ou empêchant ainsi la rotation du pochoir dans le plan horizontal et bloquant ou empêchant le mouvement latéral du pochoir par rapport au support de pochoir ; et
dans lequel les pochoirs (10, 20 ; 50, 60 ; 120) ont des ouvertures complémentaires (14, 24 ; 54, 68) de formes et dimensions différentes qui, en raison de la relation de position prédéterminée des pochoirs par rapport au support de pochoir, se combinent et se complètent pour produire des motifs, dessins ou images multicolores sur la boisson ou le produit alimentaire lorsque chaque pochoir a une substance granulée d'une couleur différente dispersée à travers ses ouvertures, **caractérisé en ce que** le support de pochoir et le pochoir sont sensiblement plats.

2. Appareil de la revendication 1, dans lequel le support de pochoir (30 ; 110) est adapté pour reposer sur la surface du produit alimentaire ou sur le rebord d'une tasse.

3. Appareil de l'une des revendications précédentes, comprenant en outre des dispositifs de fixation pour fixer de manière rigide le support de pochoir (110) à un produit alimentaire.

4. Appareil de la revendication 1 ou 2, dans lequel le support de pochoir (110) comprend au moins un trou (119) s'étendant à travers le support de pochoir, et dans lequel l'au moins un trou est destiné à recevoir un dispositif de fixation à insérer à travers celui-ci de manière à fixer le support de pochoir au produit alimentaire.

5. Appareil de la revendication 1, dans lequel la mise en prise du premier organe de positionnement (36 ; 118) avec le deuxième organe de positionnement (16 ; 26 ; 122) est agencée pour bloquer ou empêcher le mouvement latéral du pochoir (10, 20 ; 50, 60 ; 120) par rapport au support de pochoir (30 ; 110).

6. Appareil de l'une des revendications précédentes, dans lequel le support de pochoir (30 ; 110) comprend une ouverture centrale (34 ; 112).

7. Appareil de la revendication 6, dans lequel l'ouverture centrale (34 ; 112) est dimensionnée de sorte que le pochoir (10, 20 ; 50, 60 ; 120) recouvre l'ouverture centrale lorsque le pochoir repose sur le support de pochoir (30 ; 110).

8. Appareil de l'une des revendications précédentes, dans lequel le support de pochoir (30 ; 110) et/ou le pochoir (10, 20 ; 50, 60 ; 120) est de forme annulaire.

9. Appareil de l'une des revendications précédentes, dans lequel le support de pochoir (110) comprend au moins un premier organe de positionnement supplémentaire, et dans lequel le pochoir comprend au moins un deuxième organe de positionnement supplémentaire correspondant pour venir en prise avec l'au moins un premier organe de positionnement supplémentaire en même temps que la mise en prise du premier organe de positionnement avec le deuxième organe de positionnement.

10. Appareil de l'une des revendications précédentes, dans lequel le premier/deuxième organe de positionnement comprend soit une protubérance surélevée par rapport à une surface du support de pochoir/pochoir, soit un évidement formé à l'intérieur du support de pochoir/pochoir.

11. Appareil de l'une des revendications précédentes, dans lequel une forme du premier organe de positionnement (36 ; 118) est complémentaire d'une forme du deuxième organe de positionnement (16 ; 26 ; 122).

12. Appareil de l'une des revendications précédentes, dans lequel le support de pochoir (110) et le pochoir (120) définissent chacun un axe central respectif, et dans lequel le pochoir comprend au moins une partie de pochoir périphérique (124) s'étendant au-delà du support de pochoir lorsque le pochoir repose sur le support de pochoir et lorsque les axes centraux sont alignés.

13. Appareil de l'une des revendications précédentes, dans lequel le support de pochoir (110) comprend au moins une partie en évidement (114) dimensionnée de sorte que, lorsque le pochoir (120) repose sur le support de pochoir (110), le pochoir recouvre l'au moins une partie en évidement.

14. Appareil de la revendication 13 lorsqu'elle dépend de la revendication 12, dans lequel l'au moins une partie de pochoir périphérique (124) du pochoir (120) recouvre l'au moins une partie en évidement (114) du support de pochoir (110) lorsque le pochoir repose sur le support de pochoir et lorsque le premier organe de positionnement (118) est en prise avec le deuxième organe de positionnement (122).

15. Appareil de l'une des revendications précédentes, dans lequel le support de pochoir (30 ; 110) comprend au moins une saillie périphérique (116) située dans le plan horizontal, pour faciliter la saisie du support de pochoir.

16. Appareil de l'une des revendications précédentes, dans lequel le pochoir (10, 20 ; 50, 60 ; 120) comprend une ou plusieurs ouvertures formées en son sein, et dans lequel l'ouverture centrale chevauche les une ou plusieurs ouvertures du pochoir lorsque le pochoir repose sur le support de pochoir (30 ; 110).

17. Procédé de production d'un dessin sur une surface d'une boisson ou d'un produit alimentaire, le procédé comprenant les étapes qui consistent à :
positionner un support de pochoir (30 ; 110) par rapport à la surface de la boisson ou du produit alimentaire, où le support de pochoir comprend au moins une ouverture formée en son sein et comprend un premier organe de positionnement (36 ; 118) ;
poser un premier pochoir (10 ; 50) sur le support de pochoir (30 ; 110), où le premier pochoir définit un plan horizontal et comprend une ou plusieurs ouvertures (14 ; 54) formées en son sein, et où le premier pochoir repose sur le support de pochoir de sorte que le premier organe de positionnement (36 ; 56 ; 118) du support de pochoir vienne en contact avec un deuxième organe de positionnement (16 ; 118) du premier pochoir, bloquant ou empêchant ainsi la rotation du premier pochoir dans le plan horizontal et bloquant ou empêchant le mouvement latéral du pochoir par rapport au support de pochoir ; et
disperser une première substance granulée à travers une ou plusieurs ouvertures (14 ; 54) du premier pochoir (10 ; 50) et à travers l'au moins une ouverture du support de pochoir (30 ; 110), de manière à produire un agencement de la substance granulée sur la surface de la boisson ou du produit alimentaire, et
retirer le premier pochoir (10 ; 50) du support de pochoir (30 ; 110) ;
poser un deuxième pochoir (20 ; 60) sur le support de pochoir (30 ; 110), où le deuxième pochoir définit un plan horizontal et comprend une ou plusieurs ouvertures (24 ; 64 ; 68) formées en son sein, et où le deuxième pochoir repose sur le support de pochoir de sorte que le premier organe de positionnement (36 ; 118) du support de pochoir vienne en contact avec un troisième organe de positionnement (26 ; 66 ; 118) du deuxième pochoir, bloquant ou empêchant ainsi la rotation du deuxième pochoir dans le plan horizontal et bloquant ou empêchant le mouvement latéral du pochoir par rapport au support de pochoir ; et
disperser une deuxième substance granulée à travers une ou plusieurs ouvertures (24 ; 64 ; 68) du deuxième pochoir (20 ; 60) et à travers l'au moins une ouverture du support de pochoir (30 ; 110), de manière à produire un agencement de la deuxième substance granulée sur la surface de la boisson ou du produit alimentaire, où les pochoirs ont des ouvertures complémentaires de formes et dimensions différentes qui, en raison de la relation de position prédéterminée des pochoirs par rapport au support de pochoir, se combinent et se complètent, les première et deuxième substances granulées ont des couleurs différentes de sorte que la combinaison des agencements des première et deuxième substances granulées produise un dessin multicolore sur la surface de la boisson ou du produit alimentaire,
**caractérisé en ce que** le support de pochoir et le pochoir sont sensiblement plats.

18. Procédé de la revendication 17, dans lequel le support de pochoir (30 ; 110) comprend au moins une saillie périphérique (116) située dans le plan horizontal, et le procédé comprenant en outre l'étape consistant à saisir le support de pochoir par l'au moins une saillie périphérique.
